Europäisches Patentamt

European Patent Office

Office européen des brevets

(19)

(11) **EP 1 137 230 A2**

(12) **EUROPEAN PATENT APPLICATION**

(43) Date of publication:
26.09.2001 Bulletin 2001/39

(51) Int Cl.$^7$: **H04L 25/03**

(21) Application number: 01107018.2

(22) Date of filing: 21.03.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: 22.03.2000 IT TO000276

(71) Applicant: ELMER S.p.A.
00040 Pomezia (Roma) (IT)

(72) Inventors:
• **Cusani, Roberto**
00152 Roma (IT)
• **Proia, Manilo**
00040 Pomezia (Roma) (IT)

(74) Representative: **Dini, Roberto, Dr. Ing.**
Via Castagnole, 59
10060 None (Torino) (IT)

(54) **MAP equalizer**

(57)     MAP (Maximum A posteriori Probability) equalizer for receiving numerical signals propagating in a communication channel with multiple time-variant paths causing time and frequency distortions with random features, characterized in that calling S the number of the constellation symbols, calling N the number of elements of the APP (A Posteriori Probabilities) vector of the channel states, and presetting a lower integer H than N, upon each symbol received the equalization algorithm will identify and use the H elements having a higher value only, whereas the remaining N-H elements are set equal to zero, and that between the SxH elements of the above APP vector so obtained, the equalization algorithm will identify and use the H elements having a higher value only, whereas the remaining elements are set equal to zero.

**EP 1 137 230 A2**

Printed by Jouve, 75001 PARIS (FR)

**Description**

The present invention relates to a MAP equalizer for receiving numerical signals propagating in a communication channel with multiple time variable paths causing time and frequency distortions with random features.

The digital signal received in these equalizers is affected not only by a classic thermal noise during the reception, but also by intersymbol interference, known as ISI, having variable features with time, so that an equalizer supported by a channel estimator is required. Compared to the cross filter and to the decision feedback equalizer, known as DFE (Decision Feedback Equalizer), a better performing solution is the classic MLSE (Maximum Likelihood Sequence Equalizer), which is typically obtained by means of Viterbi's algorithm (in short VA), supported by a channel estimator, usually a Kalman filter, utilizing VA output decisions for channel coupling.

In view of the specialty nature of this theme, the use of initials or abbreviated terms will often be used for simplicity's sake; therefore, consultation of the large number of existing publications is suggested for further likely elucidations about the present description, such as:

- *Digital Communications by J. Proakis, Mc Graw- Hill, New York 1989;*
- *Adaptive detectors for digital modems, by A. P. Clark, Pentech Press, London 1989.*

SBS-MAP (Symbol By Symbol - Maximum A posteriori Probability) equalizer for digital channels, suggested by *K. Abend and B.D. Fritchman* in an article *"Statistical detection for communication channels with intersymbol interference", Proc. IEEE, vol. 58, pages 779-785, May 1970,* has emerged in the last years as a valid option to MLSE receiver. According to the original version of the above article, MAP had an extreme complexity compared to VA, whereas this difference has now been substantially cancelled in the recent versions of MAP equalizer, such as illustrated in the European Patent Application EP 0 822 673 A1. The various known versions of MAP equalizer are anyway fully equivalent from the performance standpoint as they only differ for their manufacturing form. At any rate, the calculation complexity associated to MAP equalizer may result extreme for practical application, such as by means of a DSP (Digital Signal Processing) device, should the channel have a high time spread and the employed constellation, i.e. the symbols set, not have a small size as in the instance of S-PSK (S-ary Phase Shift Keying) modulation, which has S symbols, or QAM like (Quadrature Amplitude Modulation). Also the suggested channels estimators to be associated to MAP equalizer for performance optimization are in practice extremely complex, should the channel have a high time spread. By a time spread it is meant that each symbol transmitted will interfere with a large number of other preceding or subsequent symbols.

It is the object of the present invention to solve the above drawbacks and provide a MAP equalizer, having a more efficient and improved performance with respect to existing solutions.

In this frame, it is the main object of the present invention to provide an equalizer, which obviates to the above drawbacks ensuring optimal detection with a Maximum A posteriori Probability (MAP) of the transmitted data and optimal estimation of the transmission channel response, as well as a drastic reduction of the computation load, in particular in the event of constellations with many symbols and/or time spread.

In order to achieve such aims, it is the object of the present invention to provide a MAP equalizer for receiving numerical signals, incorporating the features of the annexed claims, which form an integral part of the description herein.

Further objects, features and advantages of the present invention will become apparent from the following detailed description.

In order to make reading easier, the symbols and terms used in the following description are listed hereunder:

- $r(n)$ input sequence at the receiver
- $b(n)$ sequence of transmitted symbols
- L duration of the impulsive response, i.e. of the channel time spread, measured in multiples of the symbol interval
- Ts symbol interval
- D delay of data detection
- S constellation size, i.e. the set of values $\beta_1....\beta_S$, which the transmitted symbols may take. Therefore, in S-PSK modulation we have S=2 for BPSK (Binary Phase Shift Keying) modulation, S=4 for QPSK (Quaternary Phase Shift Keying) modulation, and so on. Similarly, QAM modulation may have S symbols, such as 16 QAM, 32 QAM, 64 QAM, etc.
- $^{\wedge}$ symbol indicating estimated values.

In a discrete time data transmission system, the signal received in an equivalent baseband form is

$$r(n)= \sum_{i=0}^{L-1} c_i(n) \ b(n-i) + w(n) \qquad\qquad 1)$$

where w(n) is the AWGN (Additive White Gaussian Noise) noise sequence.

The equation 1) can be expressed in a vectorial form

$$r(n)=\underline{c}^T(n) \ \underline{x}(n) + w(n) \qquad\qquad 2)$$

where $\underline{c}^T \equiv [c_0(n).....c_{L-1}(n)]^T$ is the vector Lx1 of CIR (Channel Impulse Response); in other words, $c_i(n)$ are the coefficients of the filter representing the transmission channel; $\underline{x}(n) \equiv [b(n) .....b(n-L+1]^T$ is the vector Lx1 of the channel state, having $N \equiv S^L$ possible separate configurations $\underline{m}_1.....\underline{m}_N$ ($\underline{m}_k$ is the vector Lx1, whose elements are constellation symbols, in short CS, and represents the k-th channel state. For example, for S=4 and L=6 we have $N=4^6= 4096$ different channel states.

MAP equalization algorithm, as described in the above European Patent Application EP 0822673, is based on a step-by-step calculation of the vector Nx1 of the a posteriori probabilities (APP) of the N channel states at the step no:

$$\underline{p}(n) \equiv [P(\underline{x}(n)=\underline{m}_1 \big| \underline{r}_1^{\ n}),.... ,P(\underline{x}(n)=\underline{m}_N \big| \underline{r}_1^{\ n})] \qquad\qquad 3)$$

where:

$$\underline{r}_1^{\ n} \equiv [r(1)....r(n)]$$

is the vector for detections from step 1 (initial step) up to the current step n, and $P(\alpha)$ denotes the probability of the $\alpha$ event.

From 3) above it is clear how the calculation complexity associated to MAP equalizer is proportional to LN= $LS^L$ operations for each step, i.e. for each symbol received, the same as for VA. As a result, should the channel have a high time widening(i.e. for high L values) and/or the constellation not have a small S size (e.g. 8-PSK or 64 QAM) it may be extreme for practical application. In the practice, once the transmitted constellation has been defined, the equalizer is usable only for limited temporary enlargements introduced by the channel.

Additionally, the ANKL (Adaptive Nonlinear Kalman-Like) channel estimator suggested in the above European Patent Application EP 0822673, to be associated to MAP equalizer for performance optimization, has a proportional complexity to $L=N^2=LS^{2L}$, which becomes quickly prohibitive with an increasing L.

As known, a Kalman like channel estimator uses an algorithm for obtaining a faster coefficients convergence of a fast variable channels equalizer.

With the receiver in standard operating conditions, it can be noticed how in the practice only a few N elements of the APP (A Posteriori Probabilities) vector, i.e. the vector of the A Posteriori Probabilities, have significantly non-null values. According to the present invention, presetting an H<N number, at each step the equalization algorithm will only identify and consider the H elements with a higher value of the APP vector, whereas the remaining N-H elements are set equal to 0; moreover, among the SxH elements of the above APP vector so obtained, the equalization algorithm will only identify and use the H elements with a higher value, whereas the remaining elements are set equal to zero. It is clear that the smaller H is, compared to N, the less the number of calculations requested to the equalizer. This reduced MAP solution, called RMAP in the following, is strict from a conceptual standpoint, because the "survived" H elements of the APP vector correspond to the H channel states with a higher probability. Moreover, it has been tested by means of processor simulations that the preset H number can be chosen very small compared to N, e.g. H=32 with N=4096, with a tolerable degradation of the receiver performance.

The manufacturing structure of MAP receiver is relatively simple (in particular, easily obtainable by means of the DSP device) with a complexity slightly higher than for original MAP with H states only instead of N states. Therefore, not only the RMAP equalizer has a calculation complexity proportionate to LH instead of LN, but also the annexed ANLK channel estimator has a complexity proportional to $LH^2$ (to $HL^2$, if $H \cong L$) instead of $LN^2$. As a result, the receiver can operate efficiently also for high L values, i.e. when the channel has a high time spread. It is clear that the present invention applies to any modulations. and any S size of the constellation. Moreover, any H element of the APP vector under consideration may be null in some steps; this will further simplify calculation without invalidating the present invention. Anyway, for simplicity's sake, all H elements in the following are defined as "non- null" elements.

RMAP equalizer is now described in detail as follows. For each received sample $r(n)$ corresponding to an information symbol, the RMAP equalizer provides the following operations R1-R5. Operations R1 and R2 perform a reduction of the vector $\underline{p}(n-1)$ of the APPs from the previous step and of the vector $F\underline{p}(n-1)$ of said APPs, respectively. Operations R3, R4 and R5 are formally the same as provided by MAP algorithm, but as a consequence of R1 and R2, they have a drastic reduction of the computation load.

R1. Calculation of the vector Nx1 of the above APPs, starting from the APPs of the previous step:

$$\underline{Fp}(n-1) = F\underline{p}(n-1),$$

where $F \equiv [F_{ij}]$ is the transition array NxN of the channel state, with elements $F_{ij} \equiv P(\underline{p}(n) = \underline{m}_i \mid \underline{p}(n-1) = \underline{m}_j)$, which is pre-calculated and stored in the receiver. It should be noticed how the transitions sequence of the channel states forms a homogeneous N-varied Markov chain, which takes the different N outputs formed by all possible length sub-sequences L consisting of the constellation symbols.

Since according to the present invention, $\underline{p}(n-1)$ has non-null H elements only, accordingly, based on the array structure F, $\underline{Fp}(n-1)$ will only have non-null SxH elements.

R2. Selection of H elements with a greater $\underline{Fp}(n-1)$ amplitude between its non-null SxH elements, and zero setting of the remaining SxH-H elements:

$$\underline{Fp}(n-1) = Hmax\,[\underline{Fp}(n-1)]$$

R3. Calculation of the vector Nx1 :

$$\underline{d}(n) \equiv (exp[-(\left|r(n) - \underline{c}^{\wedge T}(n|n)\,\underline{m}_1\right|^2 / N_0)], ...., exp[-(\left|r(n) - \underline{c}^{\wedge T}(n|n)\,\underline{m}_N\right|^2 / N_0)])^T$$

being $\underline{c}^{\wedge}(n/n$ the vector Lx1 of CIR estimation, supplied by the channel estimator associated to the equalizer, and $N_0$ the level of noise power spectral density.

Only the H elements of the vector $\underline{d}(n)$ located in the positions matching the non-null H elements of the vector $\underline{Fp}(n-1)$ should be calculated, since they are the only ones required for the subsequent calculation of current APPs.

R4. Calculation of the vector of current APPs:

$$\underline{p}(n) = diag\{\underline{d}(n)\}\underline{Fp}(n-1)$$

This operation will only imply the Hs produced between the non-null H elements of $\underline{d}(n)$ and $\underline{Fp}(n-1)$.

R5. Sum normalization to 1 of the non-null H elements of $\underline{p}(n)$:

$$\underline{p}(n) = Normal\,[\underline{p}(n)]$$

Operations R1-R5 represent the main 'cycle' of the iterative elaboration of the received samples, whereas the operations R6 and R7 here below perform the MAP decision rule for choosing the symbol transmitted at the step $n-D$ on the base of the APPs vector calculated at the step $n$. Therefore, there is a decision delay $D = L-1$.

R6. Calculation of the symbol probabilities vector Sxl

$$\underline{s}(n) = B\underline{p}(n)$$

where B is an array of zeros and ones, which allows calculation of each $\underline{s}(n)$ element as the sum of the $\underline{p}(n)$ elements matching channel states wherein that symbol shows up in last position, i.e. D-th position.

Since $\underline{p}(n)$ has non-null H elements only, no more than H-1 sums are required.

R7. MAP decision on the symbol

$$b^{\wedge}(n-D) = \beta_r \qquad se \qquad P(b(n-D) = \beta_r | r_1^{\ n}) > P(b(n-D) = \beta_m | \underline{r}_{-1}^{\ i}) \qquad \forall m \neq r$$

It should be noticed that the adoption of an APP vector reduced to H elements involves the opportunity of storing the values of such elements only along with their position inside the complete original APP vector consisting of N elements, at each step, i.e. for each symbol received. Similarly, the vectors and arrays derived from the APP vector based on R1-R5 have consequently reduced dimensions. Substantially, the use of the RMAP algorithm allows not only to reduce calculations compared to MAP, but also a reduction of the memory required by the receiver.

As to the channel estimator to be associated to RMAP, the following considerations apply.

With regard to channel time evolution, the following self-regressive L-variable model of the first order, as described in the above publication by A. P. Clark "Adaptive detectors for digital modems", is assumed:

$$\underline{c}(n) = A \, \underline{c}(n-1) + \underline{e}(n) \qquad\qquad 4)$$

where A is the real channel transition array LxL; $\underline{e}(n)$ is the vector Lx1 of the input sequences at model (4), where the array $R_C(0)$ of CIR coefficients powers is typically established as $R_C(0) = L^{-1} I_{LxL}$, being $I_{LXL}$ the identity array.

For each sample r(n) received matching an information symbol, the ANKL channel estimator for RMAP provides the following operations C1-C9. Operations C1, C4, C5 and C9 are formally the same as provided by the MAP algorithm; however, following the above operations R1 and R2, they show a drastic calculation reduction as described above. Operations C2, C3, C6, C7, C8 are the same as for the ANKL channel estimator for MAP.

C1. Calculation of the vector Lx1 for channel state prediction

$$\underline{MFp}(n-1) = M \, \underline{Fp}(n-1)$$

where the $M \equiv [\underline{m}_1, \ldots \underline{m}_{N-}]$ mapping array LxN, pre-calculated and stored in the receiver, is introduced. Operation C1 is simplified by the circumstance that the vector $\underline{Fp}(n-1)$ has non-null H elements only.

C2. Calculation of the vector Lx1 for channel prediction

$$\underline{c}^{\wedge}(n|n-1) = A\underline{c}^{\wedge}(n-1|n-1)$$

C3. Calculation for prediction of the sample received

$$r^{\wedge}(n|n-1) = \underline{c}^{\wedge T}(n|n-1)\underline{MFp}(n-1)$$

C4. Calculation of the array NxN of the covariance of the state prediction error (not mapped)

$$S_x(n) = \text{diag}\{\underline{Fp}(n-1)\} - [\underline{Fp}(n-1)] [\underline{Fp}(n-1)]^T$$

In the calculation of the array $[\underline{Fp}(n-1)] [\underline{Fp}(n-1)]^T$ only the multiplications involving the non-null H elements of the vector are performed $\underline{Fp}(n-1)$.

C5. Calculation of the array LxL of the covariance of the state prediction error, mapped:

$$S(n) = MS_X(n)(M^T)^*$$

The array $S_X(n)$ size NxN has H lines having each one non-null H elements, and H columns having each one non-null H elements, in the same positions. $MS_X(n)$ is then an array LxN where the N-H columns are identically null and the remaining H have elements generally varying from zero. As a result, in the product of $MS_X(n)$ by $(M^T)^*$ line/column products are obtained where only the $MS_X(n)$ lines have non-null H elements.

C6. Calculation of the array LxL of the covariance of the channel prediction error

$$U(n)= AT(n-1) A^T + 2[R_C(0) A^T - AR_C(0) A^T]$$

where $T(n-1)$ is the array defined in the next operation C9, calculated at step n-1.

C7. Calculation of Kalman filter gain

$$K(n)= [U(n) \underline{MFp}^*(n-1)] \mid \{N_0 + Trace[S^*(n)U(n)] +$$

$$+[\underline{MFp}(n-1)]^T U^*(n) \underline{MFp}(n-1) + \underline{c}^{\wedge T}(n \mid n-1) S(n) \underline{c}^{\wedge *}(n \mid n-1) \}$$

where Trace [..] is the operator calculating the sum of the elements of the array main diagonal.

C8. Calculation of channel estimation at the current step

$$\underline{c}^{\wedge}(n/n)=\underline{c}^{\wedge}(n \mid n-1)+K(n) [r(n) - r^{\wedge}(n \mid n-1)]$$

C9. Calculation of the array LxL of the covariance of the channel estimation error (filtering)

$$T(n)= [ I_{LXL} - K(n)(M\underline{p}(n))^T] U(n)$$

Calculation of M$\underline{p}$(n) is simplified in that $\underline{p}$(n) has non-null H elements only.

Similar to the above description with regard to RMPA equalizer, it should be noticed that the use of the RMAP solution implies a reduction of both the computational calculation of ANLK estimator described above and of the memory required by the receiver.

Therefore, from the above description the advantages of the RMAP equalizer and connected ANKL channel estimator according to the present invention are clear.

It is obvious that many changes are possible to the equalizer object of the present invention, without departing from the novelty spirit of the innovative idea.

For example, the sequence received can be coded during transmission with a Trellis like channel coding or convolution coding or with a differential coding by means of an appropriate filter; in this event, the channel estimator will estimate the cascade of the channel and of the coding filter.

Should coding be a differential one, then the final associating operation of the bit to the symbol established is performed based on the phase difference between the last two symbols received instead of just the last symbol received.

Even if the sequence transmitted is interlaced, the equalizer will remain unchanged, since it operates downstream the de-interlacing device.

Finally, it should be noticed that at the step n, a number reduction of the significant channel states, i.e. those with a maximum probability, can be performed on the vector $\underline{p}$(n-1) instead of the vector $\underline{Fp}$(n-1), i.e. without altering the substance of the invention.

In this event, both the steps R1 and R2 previously described will become R' 1 and R'2, respectively:

R'1. Selection of the H/S elements with a greater amplitude from the APPs of the previous step $\underline{p}$(n-1) between its non-null H elements, and zero setting of the remaining H-H/S. Obviously, in this case the H number should be a multiple of the S number of the constellation symbols.

R'2. Calculation of the vector Nx1 of the above APPs, starting from the APPs of the previous step:

$$\underline{Fp}(n-1)=F\underline{p}(n-1)$$

where $F \equiv [F_{ij}]$ is the transition array NxN of the channel state, with elements $F_{ij} \equiv P(\underline{p}(n)=\underline{m}_i \mid \underline{p}(n-1)=\underline{m}_j)$, as previously seen. Since $\underline{p}$(n-1) has non-null H/S elements only, as a result, based on the structure of the array F, $\underline{Fp}$(n-1) will have non-null H elements only.

**Claims**

1. A MAP (Maximum A posteriori Probability) equalizer for receiving numerical signals propagating in a communication channel with multiple time-variant paths causing time and frequency distortions with random features, where S is the number of symbols of a modulation constellation, and N the number of elements of an APP (A Posteriori Probabilities) vector ($\underline{p}$(n-1)) of the channel states employed by said MAP equalizer, **characterized in that** a lower integer number H than N is preset in said MAP equalizer, and upon receiving each symbol, the equalization algorithm will identify and use the H elements with a higher value only of the APP vector ($\underline{p}$(n-1)), whereas the remaining N-H elements are set equal to zero, and that between the SxH elements of an APP vector ($\underline{Fp}$(n-1)) as above, obtained from the APP vector ($\underline{p}$(n-1)), it will identify and use the H elements with a higher value only, whereas the remaining elements of the above APP vector ($\underline{Fp}$(n-1)) are set equal to zero.

2. A MAP (Maximum A posteriori Probability) equalizer for receiving numerical signals propagating in a communication channel with multiple time-variant paths causing time and frequency distortions with random features, where S is the number of symbols of a modulation constellation, and N the number of elements of an APP (A Posteriori Probabilities) vector ($\underline{p}$(n-1)) of the channel states employed by said MAP equalizer, **characterized in that** a lower integer number H than N and multiple of S is preset in said MAP equalizer, and upon each symbol received, the equalization algorithm will identify and use the H elements with a higher value only of the APP vector ($\underline{p}$(n-1)), whereas the remaining N-H elements are set equal to zero, and that the MAP equalizer between the H elements of the APP vector ($\underline{p}$(n-1)) obtained from the previous step, will identify and use the H/S elements with a higher value only for the calculation of an APP vector ($\underline{Fp}$(n-1)) as above, obtained from the APP vector ($\underline{p}$(n-1)), whereas the remaining elements are set equal to zero.

3. A MAP (Maximum A posteriori Probability) equalizer for receiving numerical signals according to claim 1 or 2, **characterized in that** a channel estimator associated to the equalizer is non linear adaptive Kalman (ANKL) like.

4. A MAP (Maximum A posteriori Probability) equalizer for receiving numerical signals according to claim 1 or 2, **characterized in that** a transmitted sequence b(n) to the equalizer is coded with a Trellis like channel coding.

5. A MAP (Maximum A posteriori Probability) equalizer for receiving numerical signals according to claim 1 or 2, **characterized in that** the transmitted sequence b(n) is coded with a convolution like channel coding.

6. A MAP (Maximum A posteriori Probability) equalizer for receiving numerical signals according to claim 1 or 2, **characterized in that** the transmitted sequence b(n) is coded with a differential coding.

7. A MAP (Maximum A posteriori Probability) equalizer for receiving numerical signals according to claim 1 or 2, **characterized in that** the transmitted sequence b(n) has S-PSK like modulation.

8. A MAP (Maximum A posteriori Probability) equalizer for receiving numerical signals according to claim 1 or 2, **characterized in that** the transmitted sequence b(n) has QAM like modulation.

9. A MAP (Maximum A posteriori Probability) equalizer for receiving numerical signals according to claim 1 or 2, **characterized in that** the transmitted sequence b(n) is subject to interlacing.

10. A MAP (Maximum A posteriori Probability) equalizer for receiving numerical signals according to claim 1 or 2, **characterized in that** the H elements with a higher value of the APP vector are stored at each step.

11. A MAP (Maximum A posteriori Probability) equalizer for receiving numerical signals according to claim 3, **characterized in that** the ANKL (Adaptive Nonlinear Kalman-Like) channel estimator associated to it comprises the following operations:

   - calculation of the vector Lx for channel state prediction:

$$\underline{MFp}(n-1)=M\underline{Fp}(n-1)$$

   being M the $M\equiv[\underline{m}_1.....\underline{m}_N]$ A MAPping array LxN
   - calculation of the vector Lx1 for channel prediction:

$$\underline{c}\,\hat{}\,(n|n)= A\underline{c}\,\hat{}\,(n-1)|n-1)$$

- calculation of the prediction of the received sample:

$$r\,\hat{}\,(n|n-1)= \underline{c}\,\hat{}^{T}(n|n-1)\underline{MFp}(n-1)$$

- calculation of the array NxN of the covariance of the state predicting state error not mapped

$$S_x(n)=\text{diag}\,\{\underline{Fp}(n-1)\} - [\underline{Fp}(n-1)]\,[\underline{Fp}(n-1)]^T$$

being $\underline{Fp}(n-1)$ formed by non-null H elements.
- calculation of the array LxL of covariance of the state prediction error, mapped

$$S(n)=MS_X(n)\,(M^T)^*$$

where $S_x(n)$ is an array NxN consisting of H lines, each one with H elements, and H columns, each one with H elements, in the same positions.
- calculation of the array LxL of the covariance of channel prediction:

$$U(n)=AT(n-1)\,A^T + 2\,[R_C(0)-A\,R_C(0)\,A^T]$$

being T(n-1) the array LxL of the covariance of the channel estimate error, calculated at the step n-1.
- calculation of Kalman filter gain

$$K(n)= [U(n)\,\underline{MFp}^*\,(n-1)]\,|\,\{N_0+\text{Trace}[S^*(n)U(n)] +$$

$$+ [\underline{MFp}(n-1)]^T U^*\,(n)\underline{MFp}(n-1) +\underline{c}\,\hat{}^{T}(n|n-1)\,S(n)\,\underline{c}\,\hat{}^{*}(n|n-1)\}$$

- calculation of the channel estimate at the current step:

$$\underline{c}\,\hat{}\,(n|n)=\underline{c}\,\hat{}\,(n|-1)+K(n)\,[r(n) - r\,\hat{}\,(n|n-1)]$$

- calculation of the array LxL of the covariance of the channel estimate error

$$T(n)=[I_{LxL}-K\,(n)\,(M\,\underline{p}(n))^T]\,U(n)$$

12. A MAP (Maximum A posteriori Probability) equalization method for receiving numerical signals propagating in a communication channel with multiple time-variant paths causing time and frequency distortions with random features, **characterized in that** upon each symbol received the following steps are performed:

- calculation of the vector Nx of the above APPs, starting from the APPs of the previous step:

$$\underline{Fp}(n-1)=F\underline{p}(n-1)$$

where $F\equiv[F_{ij}]$ is the transition array NxN of the channel state, with elements $F_{ij}\equiv P(\underline{p}(n)=\underline{m}_i\,|\,\underline{p}(n-1)=\underline{m}_j)$, being N the number of the elements of the APP vector of the channel states, and consisting $\underline{p}(n-1)$ of APP non-null H elements, being H a preset lower integer than N .
- selection of the H elements with a greater amplitude of $\underline{Fp}(n-1)$ between its non-null elements SxH, and zero setting of the remaining elements, being S the number of the constellation symbols:

$$\underline{Fp}(n-1)=Hmax\,[\underline{Fp}(n-1)]$$

- calculation of the vector Nx1 :

$$\underline{d}(n)\equiv(exp[-(|r(n)-\underline{c}^{\wedge T}(n|n)\,\underline{m}_1|^2/N_0)],...., exp[-(|r(n)-\underline{c}^{\wedge T}(n|n)\underline{m}_N|^2/N_0)])^T$$

being

$$\underline{c}^{\wedge}(n/n)$$

the vector Lx1 of CIR estimate, supplied by the channel estimator associated to the equalizer, and being the above calculation restricted to the H elements of the vector $\underline{d}(n)$, which are in the positions matching the non-null H elements of the vector $\underline{Fp}(n-1)$.

- calculation of the vector of current APPs:

$$\underline{p}(n)=\,diag\{\underline{d}(n)\}\underline{Fp}(n-1)$$

- normalisation to 1 of the sum of the non-null H elements of $\underline{p}(n)$:

$$\underline{p}(n)=\,Normal\,[\underline{p}(n)]$$

13. A MAP (Maximum A posteriori Probability) equalization method for receiving numerical signals propagating in a communication channel with multiple time-variant paths causing time and frequency distortions with random features, **characterized in that** upon each symbol received the following steps are performed:

- selection of the H/S elements with a higher value between the non-null H elements of the APPs vector calculated at the previous step and zero setting of the remaining elements, being N the number of the elements of the APP vector of the channel states, S the number of the constellation symbols and H a preset integer smaller than N and multiple of S.
- calculation of the non-null H elements of the vector Nxl of the above APPs, starting from the above H/S elements of the APPs of the previous step:

$$\underline{Fp}(n-1)=F\underline{p}(n-1)$$

being $F\equiv[F_{ij}]$ the transition array NxN of the channel state, with the elements

$$F_{ij}\equiv P(\underline{p}(n)=\underline{m}_i\mid\underline{p}(n-1)=\underline{m}_j),$$

- calculation of the vector Nx1 :

$$\underline{d}(n)\equiv(exp[-(|r(n)-\underline{c}^{\wedge T}(n|n)\,\underline{m}_1|^2/N_0)],...., exp[-(|r(n)-\underline{c}^{\wedge T}n|n)\,\underline{m}_N|^2/N_0)])^T$$

being

$$\underline{c}^{\wedge}(n/n)$$

the vector Lx I of CIR estimation, supplied by the channel estimator associated to the equalizer, and being the above calculation restricted to the H elements of the vector $d(n)$, which are in the positions matching the non-null H elements of the vector $\underline{Fp}(n-1)$.

- calculation of the vector of the present APPs:

$$\underline{p}(n)= diag\{\underline{d}(n)\}\underline{F}\underline{p}(n-1)$$

- normalisation to 1 of the sum of the non-null H elements of $\underline{p}(n)$:

$$\underline{p}(n)= Normal\ [\underline{p}(n)]$$

14. A MAP equalization method according to claim 12 or 13, **characterized in that** it comprises further steps as follows:

- calculation of the vector Sx1 of the symbol probabilities

$$\underline{s}(n)=B\ \underline{p}(n)$$

being B an array of zeros and ones, matching the probability of a determined constellation symbol.
- A MAP decision on the symbol

$$\hat{b}(n-D)= \beta_r \quad if \quad P(b(n-D)=\beta_r|r_1|_{-1}^n)>P(b(n-D)=\beta_m|r_1|_{-1}^n) \quad \forall m\neq r$$